Europäisches Patentamt

(19) European Patent Office

Office européen des brevets

(11) Publication number: **0 056 726**
**B1**

(12) **EUROPEAN PATENT SPECIFICATION**

(45) Date of publication of patent specification: **10.06.87**

(51) Int. Cl.⁴: **G 01 S 13/80,** A 01 K 11/00

(21) Application number: **82300263.9**

(22) Date of filing: **19.01.82**

(54) Remote identification of animals.

(30) Priority: **21.01.81 AU 7314/81**

(43) Date of publication of application:
**28.07.82 Bulletin 82/30**

(45) Publication of the grant of the patent:
**10.06.87 Bulletin 87/24**

(84) Designated Contracting States:
**BE DE FR GB NL**

(56) References cited:
**EP-A-0 011 810**
**DD-A- 97 960**
**DE-A-2 642 022**
**DE-A-2 748 584**
**US-A-3 713 148**
**US-A-3 739 378**
**US-A-4 075 632**
**US-A-4 262 632**
**US-A-4 274 083**

(73) Proprietor: **Australian Meat and Live-Stock
Corporation
Aetna Life Tower, Hyde Park Square Corner
Elisabeth and Bathurst Streets
Sydney New South Wales 2000 (AT)**

(72) Inventor: **Bosshard, Robert Gilbert
Lot 20 Mount Butler Estate
Uralla New South Wales 2358 (AU)**
Inventor: **Mc Intosh, Alexander Ian
2 Yallambee Avenue
Armidale New South Wales 2350 (AU)**

(74) Representative: **JENSEN & SON
8 Fulwood Place High Holborn
London WC1V 6HG (GB)**

## Description

This invention relates to an electronic system for the remote identification of animals, in particular livestock.

The advantages of remote electronic identification of livestock are well known. Remote identification avoids injury and trauma to both the operator and the animal. Also, electronic identification provides rapid and reliable identification and allows large numbers of livestock to be monitored. Due to the ever-increasing sizes of herds, manual methods are not only tedius but also no longer practicable.

A system for the remote electronic identification of livestock is disclosed in U.S. Patent No. 4,075,632 to Baldwin et al. The Baldwin patent teaches an electronic identification system comprising an implantable transponder which receives an unmodulated radio frequency signal from a transmitter/receiver. The transponder amplitude modulates the signal with predetermined uniquely coded information and reflects or retransmits it to the transmitter/receiver. Decoding of the reflected signal allows the transponder to be identified.

It has been found in practice that the system of Patent No. 4,075,632 is not entirely suitable for locating specific animals. Transmission of the radio frequency carrier signal to a herd of animals, each having a coded transponder, will generate a plurality of instantaneous responses, each being the transmitted signal as modulated and reflected by each respective transponder. Weaker reflections may be "swamped" by stronger return signals from closer animals, and consequently not recorded. Also, while the presence of a particular animal may be recognised, its location within the herd will be unknown.

The known system uses a frequency in the upper UHF region. The maximum operating range with that frequency has been found to be of the order of only 2—3 metres.

Moreover, at this frequency, animals standing behind obstacles such as other livestock, trees, etc., may be shielded from the interrogating signal and their presence may not be detected by the interrogator.

U.S. Patent No. 3,713,148 discloses a transponder, designed particularly for motor vehicles or railroad cars, which has a chargeable internal memory containing a code which is used to enable the transmission of a coded return signal. The power for the return signal is provided by the interrogator signal. The patent makes no reference to the particular frequencies to be used.

Research within the scope of the present invention has shown that the choice of carrier frequency is critical to the operation of the electronic identification system. High frequencies, such as those above 200 MHz, allow the use of small aerials in the transponder. However, with implanted transponders, high frequency signals are greatly attenuated by the animal's skin. Consequently, the range of operation is limited to close quarters, i.e., less than about one metre.

It should also be noted that operation at the higher microwave frequencies has the inherent disadvantage that both operator and livestock are exposed to fairly high levels of microwave radiation. Known microwave systems for identifying railway rolling stock, for example, are not suitable for livestock identification.

The lower radio frequencies are not attenuated as much during transmission through the animal's skin. However, at frequencies below VHF, the efficiency of the aerial is reduced. More power is required to maintain the same operating range thereby causing a greater current drain on the transponder's battery. As the transponder is implanted in the animal, the battery life should last at least as long as the life of the animal.

The availability and falling costs of microprocessors makes on-farm computers feasible. Computer control allows flexibility of operation as well as large scale reliable operation. However, many of the known electronic systems of identification are hardwired and unsuitable for software control.

It is an object of the present invention to overocme or substantially ameliorate the above described disadvantage.

This object is met by the system as set forth in claim 1 and the transponder as set forth in claim 7.

Using a carrier frequency of 150 MHz, an operating range of approximately 40 metres has been achieved using a device according to the preferred embodiment described hereinafter.

Preferably, the interrogator also comprises programmable control means, such as a microprocessor, which can vary the code of the coded VHF signal either in response to manual instructions or in accordance with a stored program. For example, in identifying the members of a particular herd of animals, the control means may be programmed to run through all possible codes of those animals. As each animal's code is transmitted, it will be recorded. To determine of a particular animal is within the herd, its code can be manually input to the control means which causes the transmitter to transmit that particular code. If a return signal is received, the presence of that particular animal is established.

Advantageously, the transponder is miniaturized and implanted under the skin of the animal at an early stage.

The invention will now be described in more detail with reference to a preferred embodiment thereof as illustrated in the accompanying drawings in which:

Fig. 1 is a schematic diagram of the transponder of the preferred embodiment;

Fig. 2 is a schematic diagram of the interrogator of the preferred embodiment;

Fig. 3 depicts wave forms of sample signals suitable for use with the preferred embodiment;

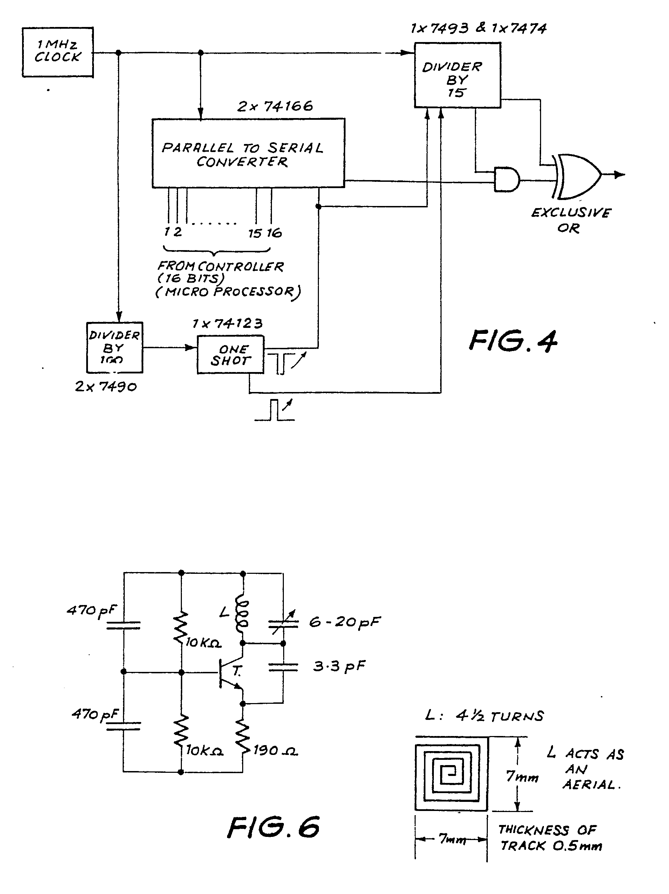

Fig. 4 shows circuit details of the 16 bits encoded;

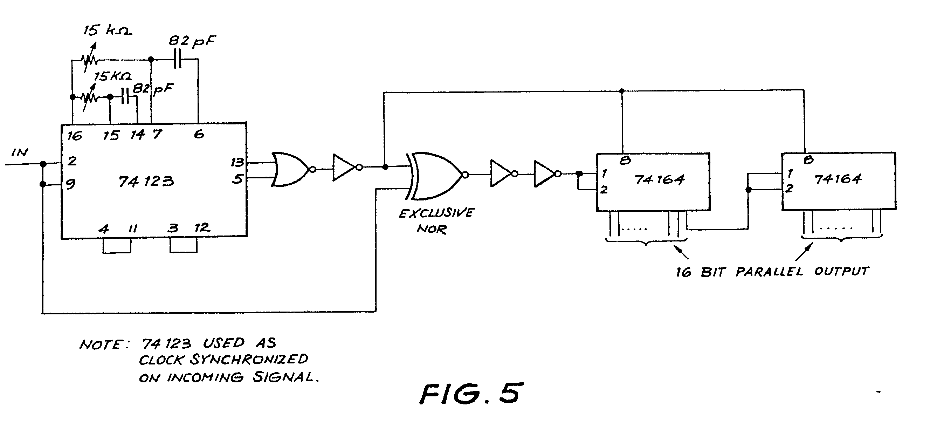

Fig. 5 shows circuit details of the 16 bits decoded on the transponder; and

Fig. 6 shows circuit details of the oscillator in the transponder.

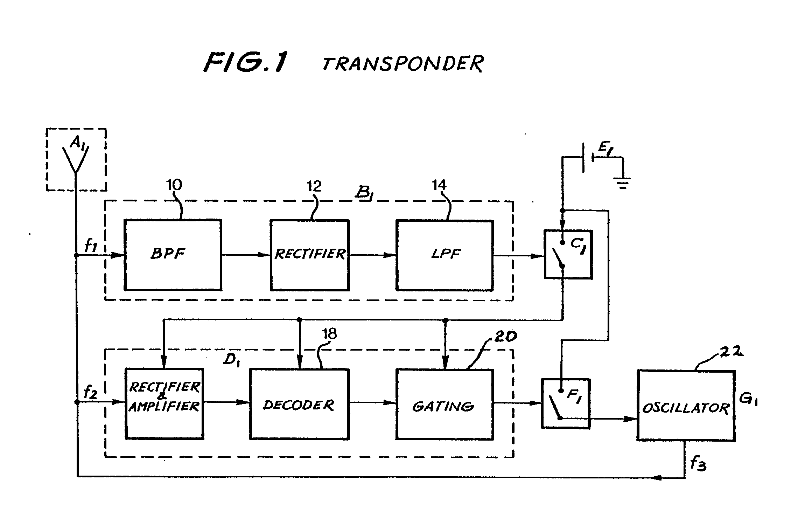

Turning to Fig. 1, the transponder of the preferred embodiment can receive signals from the interrogator, store a previously coded identification number and return a signal to the interrogator when the received coded signal is identical to that stored.

The transponder comprises an antenna $A_1$ which is used for both receiving the transmitting signals. A first receiving section $B_1$ is connected to the antenna $A_1$ and tuned to a first VHF frequency $f_1$. This tuning can be provided by a band pass filter 10. When a signal of frequency $f_1$ is received, it passes through the band pass filter 10 to a rectifier 12 and a low pass filter 14 to close a timer switch $C_1$. Typically, the timer switch $C_1$ is enabled for a period of 5 seconds on each triggering. Once activated by the receiver section B the switch $C_1$ allows a second receiver section $D_1$ to be powered from a local battery $E_1$.

The second receiver section $D_1$ operates at a second VHF frequency $f_2$, preferably 150 MHz, and comprises a decoder 18 which decodes the received coded VHF signal and compares in a comparator 20 the code derived therefrom with a code previously stored in the transponder. Upon a positive comparison, a second timer switch $F_1$, connected between the local battery $E_1$ and an oscillator 22 is closed for approximately 34 seconds. The oscillator 22 generates a return signal of frequency $f_3$ which is re-transmitted via antenna $A_1$. Typically, the oscillator is a quartz crystal to achieve stable oscillation with low power drain from the battery.

The use of two receiver sections $B_1$ and $D_1$, and the corresponding timer switches $C_1$ and $F_1$, ensures that the transponder battery $E_1$ powers the second receiver section $D_1$ and oscillator 22, in the correct sequence, when, and only when, interrogation is taking place.

The transponder of the preferred embodiment is approximately 3 cm in length, 1.5 cm in width, and 1 cm in depth. The transponder is able to be implanted under the skin of an animal at an early age, and the low current drain ensures that the battery will last for the life of the animal thereby obviating the need for removal of the transponder for battery replacement.

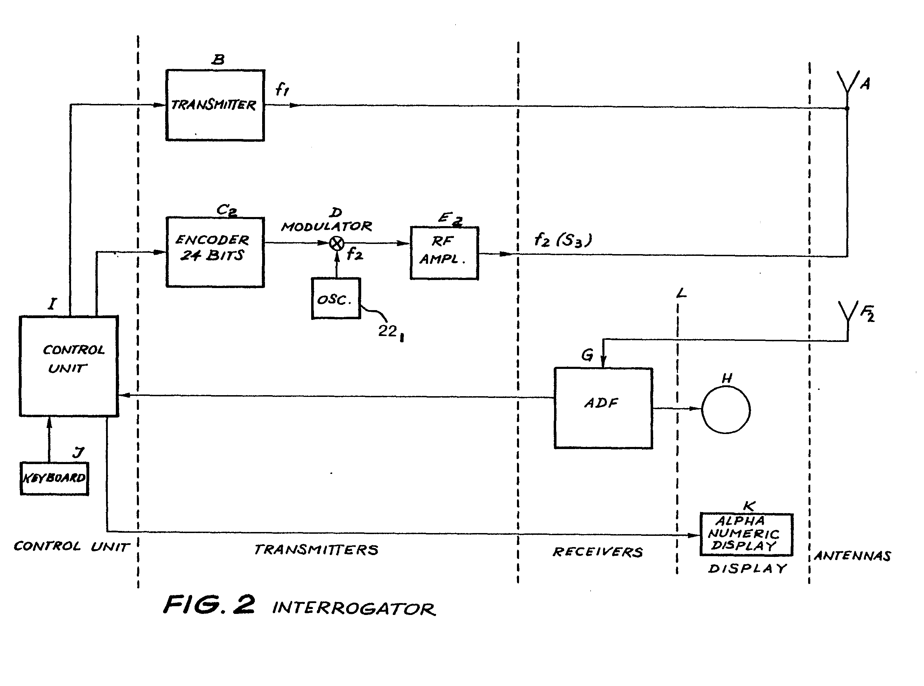

The interrogator shown in Fig. 2 comprises two radio transmitters sharing a common aerial and a radio receiver having an automatic direction finder associated therewith, together with associated controls and display. The electronic apparatus of the interrogator can be encased in a housing (not shown) which can be carried and operated by an unskilled individual on foot, horseback, or in a vehicle.

The interrogator is controlled by a control unit I which typically comprises a microprocessor such as the Rockwell AIM 65 model. However, a microprocessor can be custom designed for the application of the present invention. The control unit I has a keyboard J by which commands may be input. In performing an identification or location task, the control unit I will cause the transmitter B to transmit a signal of frequency $f_1$ via the antenna A to thereby activate the transponder. The control unit I also provides the desired code for an encoder $C_2$. This code is used to modulate a VHF signal from oscillator 22, in the modulator D. The coded signal is then amplified by RF amplifier $E_2$ before being transmitted to the transponder via antenna A.

In the preferred embodiment, the code is a digital code comprising a 24 bit word. It will be obvious to those skilled in the art that the number of bits can be varied to suit the particular application. The digital code word is provided to the encoder $C_2$ by the control unit I in parallel form. The encoder $C_2$ performs a parallel to serial conversion of the 24 bits which are then clocked through to the modulator.

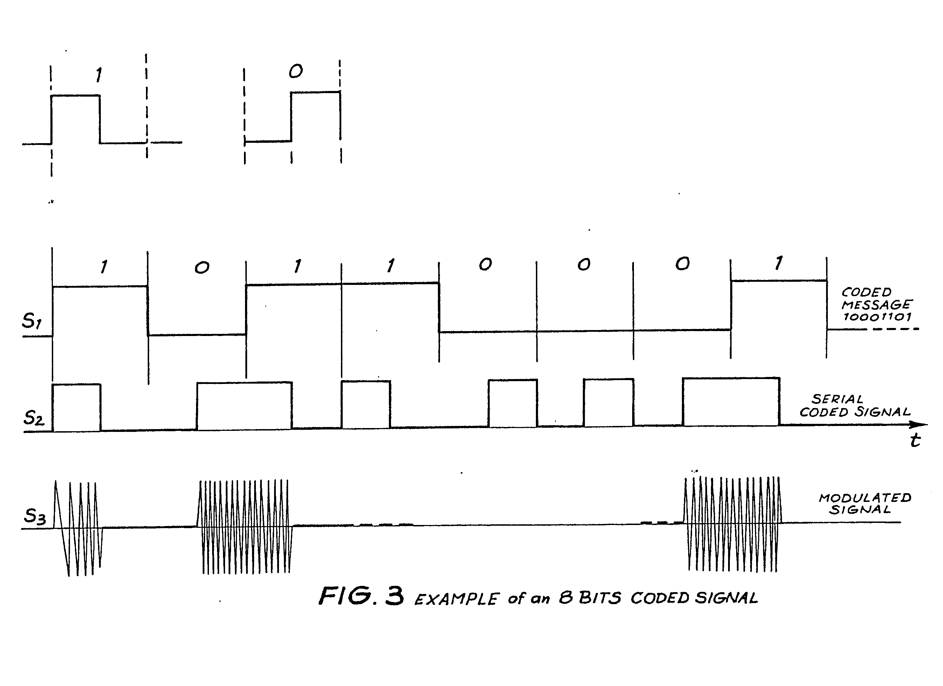

The particular coding used in the preferred embodiment is illustrated in Fig. 3. The binary value "1" is represented by a pulse in the first half of the bit period, while the binary value "0" is represented by a pulse in the second half of the bit period. This coding technique ensures that there is a pulse in each bit period, and enables a clock to be derived by the transponder from the coded signal using one-shot multivibrators. Thus, there is no need for an internal clock in the transponder.

In the preferred embodiment, the VHF signal is amplitude modulated by the digital code word, but other known modulation techniques can be used. The demodulating and decoding techniques applied in the decoder 18 of the transponder are the reverse of the modulating and encoding techniques used in the interrogator.

The interrogator also comprises an antenna $F_2$, receiver G having an automatic direction finder, and a display H connected thereto. Thus, the direction of the transponder with respect to the interrogator can be determined from the return signal which is transmitted by oscillator 22 of the transponder when a positive comparison between the transmitted code signal and the stored code is made. The display H may be either a rotating mechanical pointer or an array of light emitted diodes arranged in a suitable way to indicate the direction with the required angular resolution. The use of an LED array has the advantage of greater robustness.

The 24 bit digital code word can be divided into a number of bit groups which represent region, animal type, animal characteristics such as sex, date of birth, weight, breeding record, fate, etc. This information can be stored in the control unit I.

An alpha-numeric display K is connected to the control unit so that results of identification runs can be displayed. The control unit can also be connected to one or more external devices such as printers, recording units using magnetic tapes or discs, and computers for recording or providing information.

As the control unit is programmable, its mode of operation can be varied to suit particular applications. The preferred embodiment can be operated in three different modes or combinations of these according to which task it is required to perform. The three modes are described by way of illustrative examples below.

A. Automatic recording of identification numbers of all animals in an enclosed space or yard

The interrogator is placed at a suitable location so the animals whose numbers are to be recorded are within the operating range of the system. Upon input of the appropriate command to the control unit I, the interrogator will automatically carry out the following sequence of operations:

(i) A VHF signal of frequency $f_1$ is sent to activate the on-animal transponders.

(ii) The codes corresponding to the decimal numbers 0000 to 9999 are generated and transmitted in sequence. The time to generate and transmit the entire sequence is approximately 2 seconds. If there are more than 10,000 animals within the range of operation, the range of codes can be increased.

(iii) Whenever a transmitted code matches that stored in the transponder of an animal present, the transponder sends a reply signal which is recieved by the interrogator and recognised by the control unit. The control unit then stops the scanning of the codes temporarily.

(iv) The interrogator then transmits this code as a check. If the transponder again replies, that particular code is stored by the interrogator thereby indicating that the animal of that code is in the herd. A method of locating the animal is described below.

(v) The scan of the codes continues and the process of recognition and storing of codes corresponding to the animals present continues until the entire sequence is exhausted. Upon receipt of further instructions through the keyboard, the interrogator will then display the stored codes or transfer them to a printer or other external device.

B. Identification of a particular animal

When a particular animal whose number is unknown needs to be identified, the interrogator is enabled and as in the previous mode, scans through the available codes until a reply is recieved by the transponder indicating that the transmitted code and that stored in the transponder are identical. A check signal is sought by retransmitting the code as in example A. The identification number is then displayed and according to instructions entered through the keyboard, previously stored information about that animal may be recalled and displayed. This information can also be updated if required.

In the event of any ambiguity about which particular on-animal transponder has replied, the interrogator may be switched to the locating mode described below.

C. Automatic recording of identification numbers of all animals passing through a race

The range of the system is reduced to approximately one metre by an appropriate reduction in the strength of the signal used to activate the transponders. The interrogator is fixed in position and the animals caused to pass through a race or similar obstruction so that they come within the (reduced) range of the transponder not more frequently than one animals every two seconds, this being the time required for a complete scan and transmission of all the codes between (decimal) 0000 and 9999. The system then operates as in example B, except that the identification numbers are stored for later display or transmission to other devices as in example A.

B. Location of a particular animal

The identification code of a required animal is entered through the keyboard. The interrogator sends a sequence of enabling signals simultaneously with the coded signal. Once the transponder is in the range of the interrogator, it will send its reply signal, and with the interrogator switched to the "locate" mode, the display of the automatic direction finder will continually indicate the direction from the interrogator to the activated transponder. If the transponder changes location, the automatic direction finder display will track the animal by pointing in the new direction.

The foregoing description is given by way of example rather than limitation. The system is able to identify and/or locate any one or all of a large number of animals.

**Claims**

1. A system for short range remote electronic identification of animals, said system comprising at least one electronic transponder having a predetermined code stored therein, and an interrogator for remotely interrogating said transponder, said interrogator comprising transmitting means for transmitting a coded signal and first receiving means ($F_2$) for receiving a return signal from said transponder, the transponder including second receiving means ($A_1$) for receiving the coded signal from the interrogator, decoding means (18) for decoding the coded signal received, comparator means (20) for comparing the received signal with said predetermined code, and return signal generating means ($G_1$) connected to said comparator means; characterised in that the interrogator is portable and said coded signal is a VHF signal of a first frequency ($f_2$), and in that said transponder is battery-powered and adapted to be implanted under the skin of an animal to be identified, said return signal generating means ($G_1$) being enabled to transmit a noncoded return VHF signal at a second frequency ($f_3$) to said interrogator in response to a positive comparison by said comparator means, the transponder battery being connected to said decoding means and comparator means for a predetermined period of time only on receipt of a VHF signal at a third frequency $(f_1)$ by said second receiving means of said transponder.

2. A system as claimed in claim 1 wherein said interrogator further comprises automatic direction finding means (G) connected to said first receiving means $(F_2)$ and responsive to said non-coded return signal $(f_3)$ for indicating the direction of said transponder with respect to said interrogator.

3. A system as claimed in claim 1 or 2, further comprising programmable control means (I) connected to said transmitting means and having an input (J) for receiving manual input commands, said control means (I) being adapted to determine the code of the coded signal in accordance with said commands.

4. A system as claimed in claim 3, wherein said programmable control means (I) comprises a micro-processor.

5. A system as claimed in any preceding claim, wherein the frequency of said VHF signal of a first frequency $(f_2)$ is approximately 150 MHz.

6. A system as claimed in claim 3, wherein said control means (I) is programmable to provide a sequence of instructions to said transmitting means to thereby cause a series of coded VHF signals of said first frequency $(f_2)$ to be transmitted sequentially by said interrogator, said interrogator further comprising means for monitoring and recording reception of non-coded return signals of said second frequency $(f_3)$ from the transponder(s).

7. An electronic transponder for use in a system for short range remote electronic identification of animals, said system comprising at least one such transponder capable of having a predetermined code stored therein, and a portable interrogator for remotely interrogating each said transponder, each transponder comprising receiving means (A) for receiving a coded VHF signal of a first frequency $(f_2)$ from said interrogator, decoding means (18) connected to said receiving means (A) for decoding said coded VHF signal, comparator means (20) for comparing the decoded signal with the transponder's stored code and return signal generating means $(G_1)$ connected to said comparator means (20); characterized in that each said transponder is battery powered and adapted to be implanted under the skin of an animal to be identified, said return signal generating means $(G_1)$ being enabled to transmit a non-coded return VHF signal at a second frequency $(f_3)$ to said interrogator in response to a positive comparison by said comparator means, the transponder battery being connected to said decoding means and comparator means for a predetermined period of time only on receipt of a VHF signal at a third frequency $(f_1)$ by said receiving means of said transponder.

**Patentansprüche**

1. Elektronisches Fernerkennungssystem für Tiere auf kurze Entfernungen, welches aufweist: mindestens einen elektronischen Transponder, welcher einen vorbestimmten Code gespeichert hat, und ein Abfragegerät zur Fernabfrage des Transponders, wobei das Abfragegerät eine Übertragungsvorrichtung zum Übertragen eines codierten Signals aufweist und eine erste Empfangsvorrichtung $(F_2)$ zum Empfangen eines Rücksignals vom Transponder, wobei der Transponder eine zweite Empfangsvorrichtung $(A_1)$ aufweist zum Empfangen des codierten Signals von der Abfragevorrichtung, eine Decodervorrichtung (18) zum Decodieren des empfangenen codierten Signals, eine Komparatorvorrichtung (20) zum Vergleichen des empfangenen Signals mit dem vorbestimmten Code und eine Rücksignalerzeugungsvorrichtung $(G_1)$, die mit der Komperatorvorrichtung verbunden ist, dadurch gekennzeichnet, daß die Abfragevorrichtung tragbar ist und daß das codierte Signal ein VHF-Signal einer ersten Frequenz $(f_2)$ ist, und daß der Transponder batteriegespeist ist und unter die Haut des zu identifizierenden Tieres implantiert werden kann; wobei die Rücksignalerzeugungsvorrichtung $(G_1)$ aktiviert wird zum Übersenden eines nicht codierten Rück-VHF-Signals mit einer zweiten Frequenz $(f_3)$ zur Abfragestation als Antwort auf ein positives Vergleichsergebnis der Komparatorvorrichtung, wobei die Transponderbatterie über einen vorbestimmten Zeitraum mit der Decodervorrichtung und der Komparatorvorrichtung nur dann verbunden wird, wenn ein VHF-Signal mit einer dritten Frequenz $(f_1)$ durch die zweite Empfangsvorrichtung des Transponders empfangen wird.

2. System nach Anspruch 1, dadurch gekennzeichnet, daß die Abfragevorrichtung ferner eine automatische Richtungsfindevorrichtung (G) aufweist, die mit der ersten Empfangsvorrichtung $(F_2)$ verbunden ist und in Abhängigkeit vom nicht codierten Rücksignal $(f_3)$ die Richtung des Transponders bezüglich der Abfragevorrichtung anzeigt.

3. System nach Anspruch 1 oder 2, dadurch gekennzeichnet, daß sie ferner aufweist eine programmierbare Steuervorrichtung (I), die mit der Übertragungsvorrichtung verbunden ist und einen Eingang (J) aufweist zum Empfangen von manuellen Eingangskommandos, wobei die Steuervorrichtung (I) in Übereinstimmung mit den Kommandos den Code des codierten Signals bestimmen kann.

4. System nach Anspruch 3, dadurch gekennzeichnet, daß die programmierbare Steuereinrichtung (I) einen Mikroprozessor enthält.

5. System nach einem der vorangehenden Ansprüche, dadurch gekennzeichnet, daß die Frequenz des VHF-Signals mit einer resten Frequenz $(f_2)$ ungefähr 150 MHz beträgt.

6. System nach Anspruch 3, dadurch gekennzeichnet, daß die Steuervorrichtung (I) programmierbar ist, um eine Sequenz von Instruktionen zur Übertragungsvorrichtung zu liefern und dadurch zu bewirken, daß eine Reihe von codierten VHF-Signalen der ersten Frequenz $(f_2)$ sequentiell durch die Abfragevorrichtung übertragen wird, wobei die Abfragevorrichtung ferner eine Vorrichtung aufweist zum Überprüfen und Aufzeichnen des Empfangs der nicht codierten Rücksignale der zweiten Frequenz ($f_3$) vom Transponder.

7. Elektronischer Transponder zur Benutzung in einem elektronischen Identifikationssystem für Tiere auf kurze Entfernungen, welches aufweist mindestens einen solchen transponder, der einen vorbestimmten Code gespeichert hat, und eine tragbare Abfragevorrichtung zur Fernabfrage eines jeden Transponders, wobei jeder Transponder eine Empfangsvorrichtung (A) aufweist zum Empfangen eines codierten VHF-Signals mit einer ersten Frequenz ($f_2$) von der Abfragevorrichtung, eine Decodiervorrichtung (18), die mit der Empfangsvorrichtung (A) verbunden ist, um das codierte VHF-Signal zu decodieren, eine Komperatorvorrichtung (20) zum Vergleichen des decodierten Signals mit dem gespeicherten Code des Transponders und eine Rücksignalerzeugungsvorrichtung ($G_1$), die mit der Komparatorvorrichtung (20) verbunden ist, dadurch gekennzeichnet, daß jeder der Transponder batteriebetrieben ist und unter die Haut des zu identifizierenden Tieres implantiert werden kann, wobei die Rücksignalerzeungungsvorrichtung ($G_1$) aktiviert wird, um eine nicht codiertes Rück-VHF-Signal mit einer zweiten Frequenz ($f_3$) zur Abfragevorrichtung zu übertragen in Antwort auf ein positives Vergleichsergebnis durch die Komparatorvorrichtung, und wobei die Transponderbatterie mit der Decodiervorrichtung und der Komparatorvorrichtung für einen vorbestimmten Zeitraum nur dann verbunden wird, wenn ein VHF-Signal der dritten Frequenzy ($f_1$) durch die Empfangsvorrichtung des Transponders empfangen wird.

**Revendications**

1. Système électronique à courte portée d'identification à distance d'animaux, comprenant au moins un émetteur-récepteur asservi par impulsions, dans lequel est mémorisé un code prédéterminé, et un émetteur pilote d'impulsions d'interrogation à distance de l'émetteur-récepteur asservi par impulsions; ledit émetteur pilote d'impulsions comportant: un moyen de transmission d'un signal codé, un moyen de première réception ($F_2$) permettant de recevoir un signal de retour émis par l'émetteur-récepteur asservi par impulsions, lequel comporte un moyen de réception (A) permettant la réception du signal codé émis par l'émetteur pilote d'impulsions, un moyen de décodage (18) du signal reçu, un moyen comparateur (20) du signal reçu avec le code prédéterminé et un moyen générateur d'un signal de retour ($G_1$) asservi au moyen comparateur, caractérisé en ce que l'émetteur pilote d'impulsions est portatif, en ce que le signal codé est émis en très haute fréquence à une première fréquence ($f_2$), en ce que l'émetteur-récepteur asservi par impulsions et sa batterie d'alimentation sont implantés sous la peau de l'animal à identifier en ce que le moyen générateur ($G_1$) du signal de retour est capable de transmettre un signal de retour non codé à une seconde fréquence ($f_3$) à l'émetteur pilote d'impulsions lorsque le résultat de la comparaison par la moyen comparateur est positif, en ce que la batterie d'alimentation de l'émetteur-récepteur asservi par impulsions est reliée au moyen de décodage et au moyen comparateur pour un temps prédéterminé seulement à la réception d'un signal de très haute fréquence à une troisième fréquence ($f_1$) par ledit moyen de réception dudit émetteur-récepteur asservi par impulsions.

2. Système selon la revendication 1, caractérisé en ce que l'émetteur pilote d'impulsions comporte un moyen de radiogoniométrie automatique (G), relié au moyen de première réception ($F_2$) et sensible au signal de retour non codé ($f_3$), indiquant la direction de l'émetteur-récepteur asservi par impulsions par rapport à l'émetteur pilote d'impulsions.

3. Système selon la revendication 1 ou 2, caractérisé en ce qu'il comprend un un moyen de contrôle programmable (I), relié au moyen de transmission, comportant un clavier (J) d'entrée, manuelle de commandes, ledit moyen de contrôle (I) étant adapté pour fixer le code du signal codé, en conformité avec ladite commande.

4. Système selon la revendication 3, caractérisé en ce que le moyen de contrôle programmable (I) comporte un microprocesseur.

5. Système selon l'une quelconque des revendications précédentes, caractérisé en ce que la fréquence du signal de première fréquence ($f_2$) est d'environ 150 MHz.

6. Système selon la revendication 3, caractérisé en ce que le moyen de contrôle (I) est programmable, de façon à fournir une succession d'instructions au moyen de transmission, afin de produire une série de signaux codés, de très haute fréquence ($f_2$) lesquels sont transmis sequentiellement par l'émetteur pilote d'impulsions; ledit émetteur pilote d'impulsions comportant, de plus, un moyen de contrôle et d'enregistrement des signaux de retour non codés de seconde fréquence ($f_3$) générés par l'émetteur-récepteur asservi par impulsions.

7. Emetteur-récepteur électronique asservi par impulsions utilisable dans un système électronique à courte portée, d'identification à distance d'animaux, comprenant au moins un tel émetteur-récepteur asservi par impulsions capable de mémoriser un code déterminé et un émetteur pilote d'impulsions portatif d'interrogation à distance de chaque émetteur-récepteur asservi par impulsions, chaque émetteur-récepteur asservi par impulsions, comportant un moyen de réception ($A_1$) pour la réception d'un signal codé, de très haute fréquence, de première fréquence ($f_2$) de l'émetteur pilote d'impulsions, un moyen de décodage (18) relié au moyen de réception ($A_1$) pour le décodage dudit signal de très haute fréquence codé, un moyen comparateur (20) pour la comparaison du signal décodé avec le code mémorisé dans l'émetteur-récepteur asservi par impulsions et un moyen générateur ($G_1$) d'un

signal de retour asservi audit moyen comparateur, caractérisé en ce que chaque émetteur-récepteur asservi par impulsions et sa batterie d'alimentation sont conçus pour être implantés sous la peau d'un animal à identifier, ledit moyen générateur ($G_1$) d'un signal de retour étant capable de transmettre un signal de retour non codé, de très haute fréquence, à la seconde fréquence ($f_3$) à l'émetteur pilote d'impulsions en réponse à une comparaison positive par le moyen comparateur, la batterie d'alimentation de l'émetteur-récepteur asservi par impulsions étant reliée auxdits moyens de décodage et moyen comparateur pour un temps prédéterminé seulement à la réception d'un signal de très haute fréquence à une troisième fréquence ($f_1$) par ledit moyen de réception dudit émetteur-récepteur asservi par impulsions.

**FIG.1** TRANSPONDER

**FIG. 2** INTERROGATOR

Labels: A, B — TRANSMITTER, $f_1$, $C_2$ — ENCODER 24 BITS, D — MODULATOR, $f_2$, OSC. 22, $E_2$ — RF AMPL., $f_2 (S_3)$, $F_2$, G, H, ADF, I — CONTROL UNIT, J — KEYBOARD, K — ALPHA NUMERIC DISPLAY

ANTENNAS — DISPLAY — RECEIVERS — TRANSMITTERS — CONTROL UNIT

CODED MESSAGE 10001101

SERIAL CODED SIGNAL

MODULATED SIGNAL

$t$

$S_1$ $S_2$ $S_3$

*FIG. 3 EXAMPLE of an 8 BITS CODED SIGNAL*

FIG.4

FIG.6

15 kΩ

82 pF

15 KΩ

82 pF

IN

16 15 14 7 6

2

9          74 123          13

5

4 11 3 12

EXCLUSIVE
NOR

8

1        74 164

2

8

1        74 164

2

16 BIT PARALLEL OUTPUT

NOTE: 74 123 USED AS
CLOCK SYNCHRONIZED
ON INCOMING SIGNAL.

FIG. 5

0 056 726